# EUROPEAN PATENT APPLICATION

(11) **EP 2 521 023 A2**
(43) Date of publication of application: **07.11.2012**
(21) Application number: 12151633.0
(22) Date of filing: 18.01.2012
(51) Int. Cl.: G06F 3/12

(54) **System and method for generating enhanced receipts**

(30) Priority: 02.05.2011 US 201113099176
(71) Applicant: Seiko Epson Corporation, Tokyo 163-0811 (JP)
(72) Inventor: Espela, Patrick, Los Angeles, CA 90065 (US); Nagasawa, Hiroyuki, Suwa-shi, Nagano 392-8502 (JP)
(74) Representative: MERH-IP Matias Erny Reichl Hoffmann

(57) **Abstract**

A system that generates, and a method for generating, a receipt containing print indicative of transaction information, and also marketing or graphical information that is generated independently of the system software and the transaction data. The marketing or graphical information may be generated in a number of different ways including sequentially, randomly, statistically or manually, one of which is set as the processing mode. A printer driver includes functional components for processing the transaction data, generating a command for printing one or more coupons within a set according to the set processing mode, and sending the command along with associated print data for printing the coupon(s).

## Description

### BACKGROUND

### Field of Invention

The present invention is related to generating enhanced receipts. More particularly, embodiments of the present invention relate to adding marketing or graphical information to a receipt without using the transaction data or other text data as a trigger.

### Description of Related Art

Nearly all retail establishments have a system for generating receipts for customer purchases. Such a receipt typically itemizes the associated purchase, stating each item purchased and the corresponding price. In any effort to generate additional business from each customer, retailers often add additional marketing or graphical information to the receipts. To facilitate such a marketing endeavor, retail establishments may employ a computer/printer system or a point-of-sale (POS) system. Such a system enables the establishment to store the additional information that can be added to receipts.

Some systems use triggers in the transaction data or text data as the basis for determining what marketing or graphical information to add. This requires that the system possess the capability to parse the data or text strings that represent the transaction information. In some systems, the adding of the marketing or graphical information to the receipt is dependent on, and therefore requires some modification to, the system (e.g., POS system) software. Making appropriate modification to the system software would be time consuming and would require the retailer to incur additional cost.

It is within this context and environment that embodiments of the present invention arise.

### SUMMARY OF INVENTION

The present invention does not employ a text or data trigger approach to adding marketing or graphical information to a receipt. Rather, the present invention provides a variety of ways of adding marketing or graphical information to a receipt independently of the associated transaction data, and also independently of the host, e.g., POS, software.

One aspect of the present invention is embodied in a method for generating a receipt. The method comprises setting a processing mode from among a plurality of processing modes; receiving transaction data; processing the transaction data to generate first print data indicative of the transaction data; selecting and retrieving at least one enhancement item from among a plurality of enhancement items according to the set processing mode; generating a command and sending the generated command and second print data representative of the selected at least one enhancement item; printing the first and second print data on the receipt; and updating a file to indicate that the at least one enhancement item was printed on the receipt.

Preferably, the plurality of processing modes includes sequential, random, statistical and manual modes.

In embodiments of the sequential mode, the selecting operation comprises selecting and retrieving the at least one enhancement item that is next in a sequence of the plurality of enhancement items. Each such item may appear only once in the sequence.

In embodiments of the random mode, a present sequence of the plurality of enhancement items is randomly shuffled to create a new sequence of such items, and in the random mode, the selecting operation comprises selecting and retrieving the at least one enhancement item that is next in the new sequence of such items. Each of the plurality of enhancement items may appear only once in each of the present and new sequences.

In embodiments of the statistical mode, a present sequence of the plurality of enhancement items is reconfigured as a new sequence in which each item appears in accordance with a weight assigned to that item, and in the statistical mode, the selecting operation comprises selecting and retrieving the at least one enhancement item that is next in the weighted sequence of the plurality of enhancement items. Each of the enhancement items in the present sequence may appear only once, whereas, in the new, weighted, sequence, each item may appear one or more times, or even not at all, depending on that item's assigned weight.

In embodiments of the manual mode, all of the plurality of enhancement items are displayed, preferably in a pop up window, for manual selection. Preferably, the manual mode includes a time out function, such that if no enhancement item is selected within a specified period of time, the processing mode automatically changes to one of the other modes.

Another aspect of the invention involves a system for processing transaction data and also for generating a receipt as described above. Such a system comprises a host and printer. The host, which may be a POS terminal, receives and processes transaction data, generates first print data indicative of the transaction data, and stores a plurality of enhancement items. The host further includes a setting tool for setting a processing mode from among of plurality of such modes to configure the system for selecting and retrieving at least one enhancement item from among the plurality of enhancement items in accordance with a set processing mode, the setting tool being further configured for entering information pertaining to the selected processing mode. A printer driver generates a command for printing the selected at least one enhancement item and for sending the generated print command and second print data representative of the selected at least one enhancement item. The printer driver may also modify the first print data for compatibility with the printer and generate a data stream from the first and second print data to be sent to the printer, which is configured to print a receipt.

Embodiments of the system possess additional functionality consistent with the method operations described above.

Other objects and attainments together with a fuller understanding of the invention will become apparent and appreciated by referring to the following description and claims taken in conjunction with the accompanying drawings.

### BRIEF DESCRIPTION OF THE DRAWINGS

In the drawings like reference symbols refer to like parts.

Fig. 1 illustrates an exemplary system in accordance with embodiments of the present invention.

Fig. 2 illustrates the basic structure of generating a coupon for inclusion on a receipt in accordance with embodiments of the invention.

Figs. 3A, 3B and 3C show the creation of print lists for respective processing modes from information obtained by the coupon setting tool, according to embodiments of the invention.

Fig. 4 shows a display of all coupons in the manual mode, according to embodiments of the invention.

Fig. 5 illustrates the structure of the printer driver and further structure of the rendering component of the printer driver in accordance with embodiments of the invention.

Fig. 6 is a timing and flow diagram of generating and printing a coupon on a receipt independently of the host software in accordance with embodiments of the invention.

Fig. 7 is a flow chart for creating a command for printing a coupon on a receipt in accordance with embodiments of the invention.

Figs. 8A and 8B show examples of the setting file and executed result file respectively, according to embodiments of the invention.

Fig. 9A shows an example of a one page receipt containing both the actual receipt based on the transaction data and a coupon, according to embodiments of the present invention.

Fig. 9B shows an example of a two page receipt, where the first page has the same layout as the receipt shown in Fig. 9A, and the second page is copy of the receipt portion only.

### DESCRIPTION OF THE PREFERRED EMBODIMENTS

In the following detailed description of various embodiments of the invention, reference is made to the accompanying drawings which form a part hereof, and in which are shown, by way of illustration, specific embodiments in which the invention may be practiced. The invention, however, is not so restricted. Rather, it is to be understood that other embodiments may be utilized and structural changes may be made without departing from the scope of the present invention.

The following description provides example embodiments of methods and system for generating an enhanced receipt that includes an enhancement item, e.g., marketing or graphical data, (sometimes referred to as "coupon(s)" in connection with the description of the illustrated embodiments) that is generated independently of the transaction data associated with the underlying purchase. Systems may include a single apparatus such as a POS terminal in which all appropriate functionality is embodied, or a host, such as a POS register, in communication with a printer with appropriate hardware and software embodied in these components.

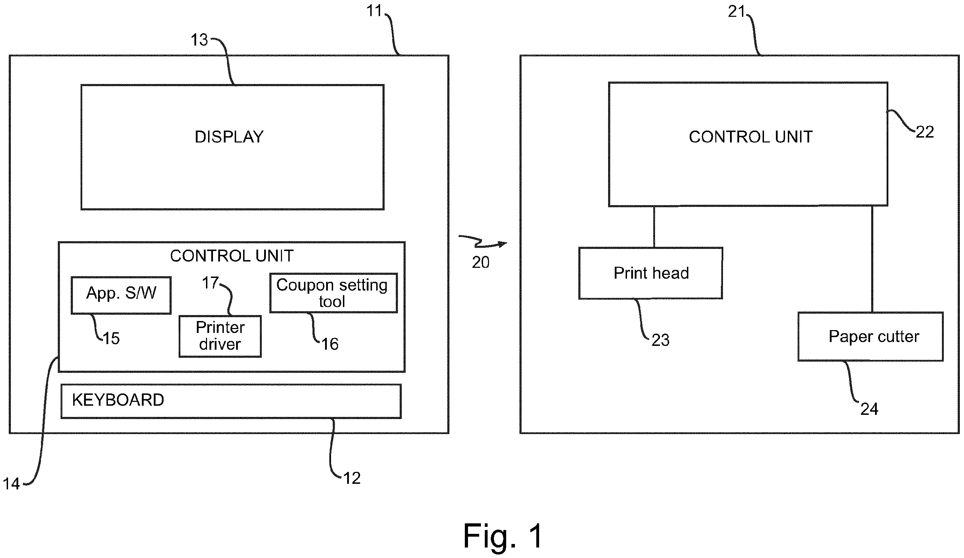

Fig. 1 shows an exemplary system comprising a POS register 11 for entering purchase information and processing payment related to a customer transaction. It includes input component(s) such as a keyboard 12 and a display 13 for displaying information and data relevant to the transaction. Keyboard 12 may be implemented in hardware or software. In the latter case, the keyboard may be in the form of a touch panel that is displayed on display 13. POS register 11 also includes a control unit 14 that includes a processor, e.g., a CPU for executing POS application software 15 that is retrieved from memory which may be in the form of RAM and ROM. The memory may also be used for storing coupons. In accordance with embodiments of the invention, POS register 11 also includes a coupon setting tool 16 for setting the way in which a coupon will be added to a receipt and for receiving information pertaining thereto for so generating the coupon. Tool 16 may be implemented using appropriate hardware, firmware or software, or appropriate combination thereof, as would be understood by one skilled in the art in light of the disclosure herein. POS register 11 also includes a printer driver 17, which may be implemented in any of a variety of architectures, e.g., APD, OPOS, OPOS.net, JavaPOS, UPOS, and future versions thereof, suitable for POS operating system being used.

POS register 11 is in communication with a printer 21 for printing receipts including enhanced receipts in accordance with the invention. Communication link 20 may be physical, e.g., by a USB (Universal Serial Bus) cable, or wireless that conforms to a suitable protocol or standard, including but not limited to, Bluetooth® and any applicable IEEE standard. Printer 21 comprises a control unit 22 that interfaces with various components including a print head 23 for printing the receipt and a paper cutter 24 for cutting the receipt.

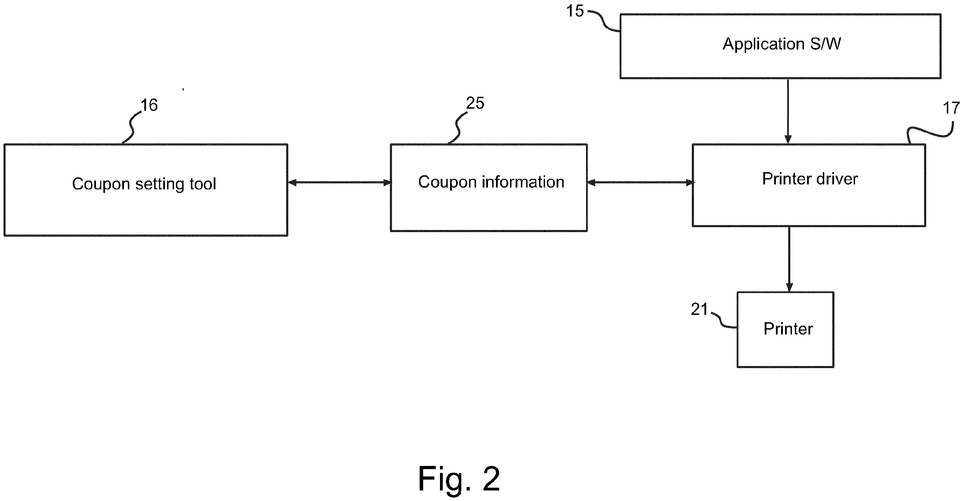

Fig. 2 illustrates the overall structure of a system for generating enhanced receipts. Coupon setting tool 16 is for setting the processing mode, e.g., the way in which a coupon to be printed on a receipt will be generated and for generating a print list based on which coupons will be retrieved and printed. These modes include sequential, random, statistical and manual. In each mode, there is a set of coupons from which one will be generated. These coupons, the data for each of which is stored in memory, are registered and listed in accordance with the selected mode. Setting tool 16 also provides instructions for converting each coupon within the set to an image and for creating and saving a list indicative of the order in which the coupons will be printed. The print list is dependent on the mode selected. The print list or information representative of it is then output as coupon information 25 to printer driver 17, which directs the printing of the first or next coupon in the list. Printer driver 17 also receives transaction data from software application 15 and concatenates the two types of data into a data stream for sending to printer 21. Preferably, the coupon data is included for printing after the transaction data.

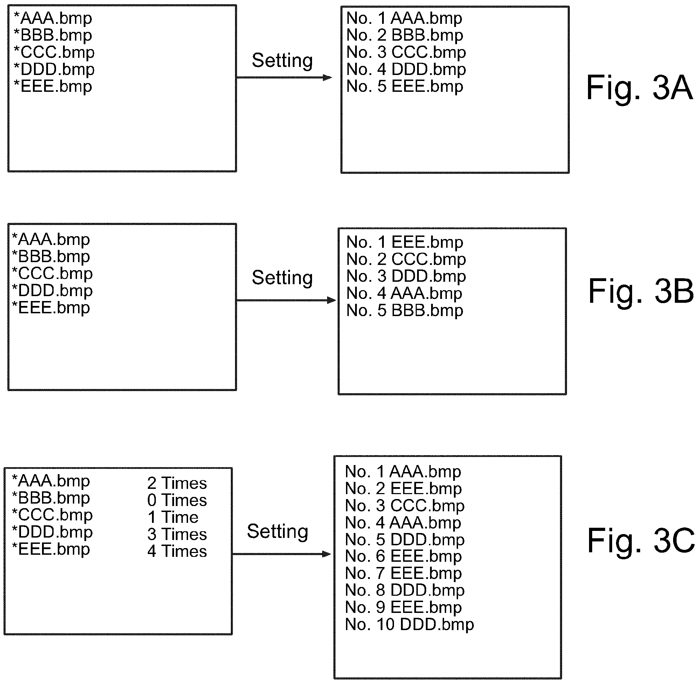

Fig. 3 illustrates the creation of a print list from the information obtained by the coupon setting tool 16 in each of the sequential mode (Fig. 3A), the random mode (Fig. 3B) and statistical mode (Fig. 3C). In each of these three figures, the left box shows the coupon information listed in the coupon setting tool 16, which may be the entire set of coupons stored in memory or a subset, and the right box shows the order or sequence in which the coupons will be retrieved and printed, which is based on the information in the coupon setting tool. As will be explained, the coupon setting tool list identifies each coupon in the set from which selection is made, whereas the print list is an ordered list or sequence, which may be weighted.

As can be seen in Fig. 3A, in sequential mode, the print list created will have the same sequence or order as the coupon setting tool list. In the random mode, the individual coupons in the coupon setting tool list are shuffled randomly to generate the print list, as shown by way of example in Fig. 3B. In the statistical mode, each coupon is given a weight or print frequency, as shown in Fig. 3C. As shown in that figure, the coupon setting tool list indicates that there are five (5) coupons within the set. Next to each coupon in that list is that coupon's weight, which is entered using coupon setting tool 16. In the illustrated embodiment, coupon AAA has a weight of 2, BBB a weight of 0, CCC a weight of 1, DDD a weight of 3 and EEE a weight of 4. From this information, coupon setting tool generates a list of the first ten prints. Within the print list, each coupon appears or does not appear in accordance with its assigned weight. Coupon AAA appears twice and hence will be printed twice within the first ten prints; BBB having a weight of 0 does not appear at all and therefore will not get printed; CCC appears and will be printed once; DDD appears and will be printed three times; and EEE four times. In this embodiment, a random shuffle is applied to the sequence or order of the weighted print list. Thus, the number of times that a particular coupon appears in the list is in accordance with its assigned weight, but the overall sequence in which the coupons will be generated and printed is random.

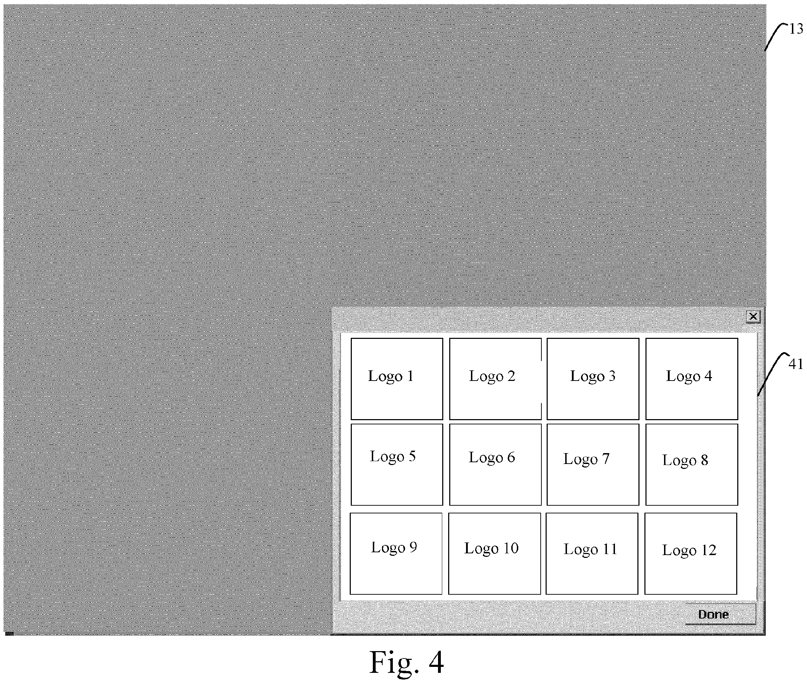

As previously noted, coupon generation can also be done manually. When manual mode is selected via coupon setting tool 16, printer driver 17 will generate a display of all of the coupon logos to appear on the screen of display 13. Such display of the coupon logos may be in the form of a pop up, as shown in Fig. 4. The operator or user may then select any one or more of the displayed coupons for printing by, for example, touching the desired coupon logo(s) on the screen. After the selection is made, the operator may touch "Done" to close the pop up window. In some embodiments, the manual mode is configured with a time out function. That is, if no selection is made within a set amount of time after the pop up display appears, the system will revert to one of the other modes.

The manual mode may also be configured to include a bypass, in which the operator decides that no coupon is to be generated. In this case, after the coupon logo display appears, the operator would take some action to indicate that no coupon is to be generated. For example, in the case where the coupon logo display is in the form of a pop up, the operator may simply touch "Done" without first selecting any coupon. Another option would be to reconfigure the time out mode, such that if no coupon selection is made within a set amount of time, after display, the system accepts that non action as an instruction that no coupon is to be generated.

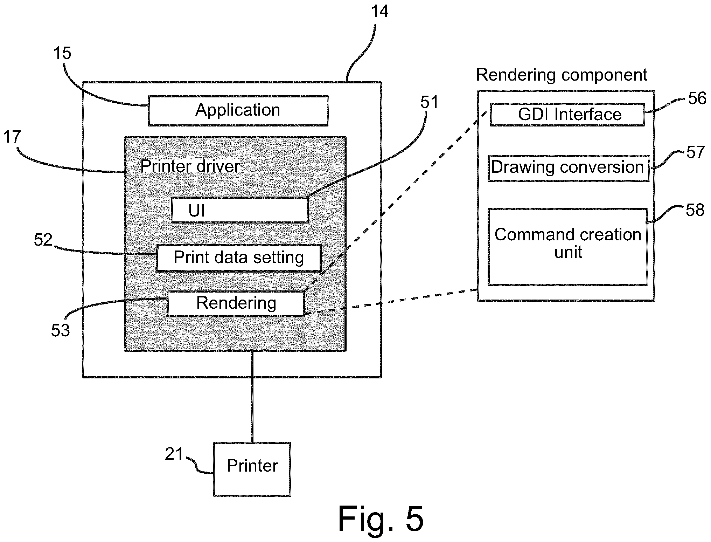

Fig. 5 shows the structure of printer driver 17. It includes a user interface (UI) component 51, which provides a display screen for setting various printing parameters, enables the saving a particular configuration, and which interfaces with the operating system of the system. Driver 17 also includes a print data setting component 52, which sets the print data based on printer model information and configuration data. A rendering component 53 includes a Graphics Device Interface (GDI) 56, a drawing conversion element 57 and a command creation unit 58 for converting the print data created by application software 15 and set by print data setting component 52 to a print command, which is output to printer 21. The processing carried out by printer driver 17 and its components in accordance with embodiments of the invention may be implemented within a variety of architectures and interfaces, as noted above. The disclosure herein is not architecture specific. Rather, such disclosure provides the functional information one skilled in the art would require to write program code to perform the described processing.

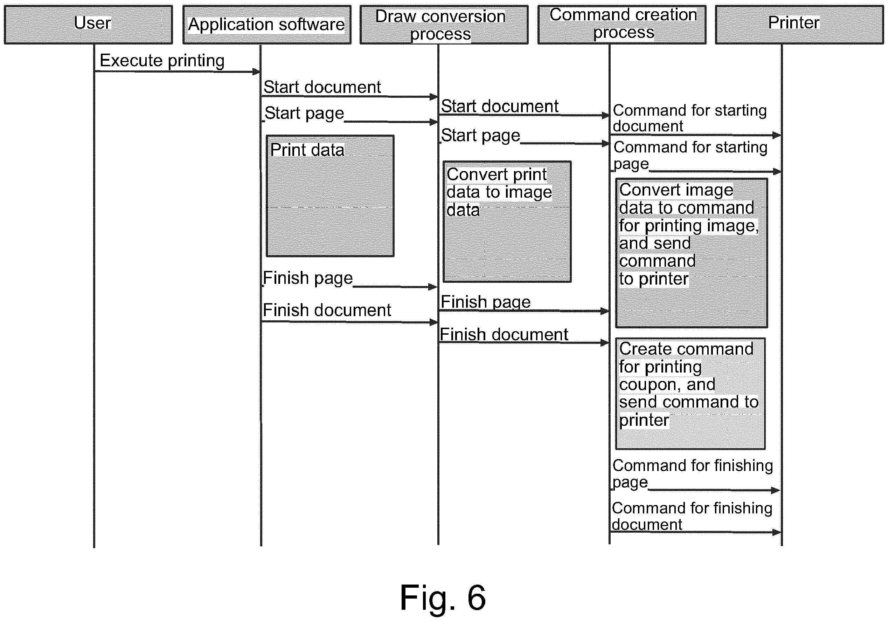

Fig. 6 is a timing and flow diagram of adding a coupon to a receipt independently of the POS software. Initially, a user executes a printing operation. This prompts application software 15 to issue start document and page instructions, which are passed to draw conversion element 57 of printer driver 17 and then to its command creation unit 58. Application software 15 generates print data from the transaction data entered in connection with the customer purchase, and issue finish page and finish document instructions. In response to the start document and page instructions issued by the application software, draw conversion element 57 executes a draw conversion process, converting the print data to image data. Command creation unit 58, in response to start document and page instructions, converts the image data to a command for printing an image, which command is sent to printer 21 to print the transaction data. Finish page and document instructions are propagated from the application software, through the draw conversion element to the command creation unit. In response to such instructions, command creation unit 58 creates a command for printing a coupon that was selected according to applied mode and sends the command along with the data for the selected and retrieved coupon to the printer to print the coupon data. Commands for finishing the page and document are also sent to the printer.

In the case where the receipt is one page, the start document and start page instructions are essentially merged into one. The same is true for the end document and end page instructions. In the case where additional copies of the receipt are to be printed perhaps a copy for the retailer-page and document instructions are different.

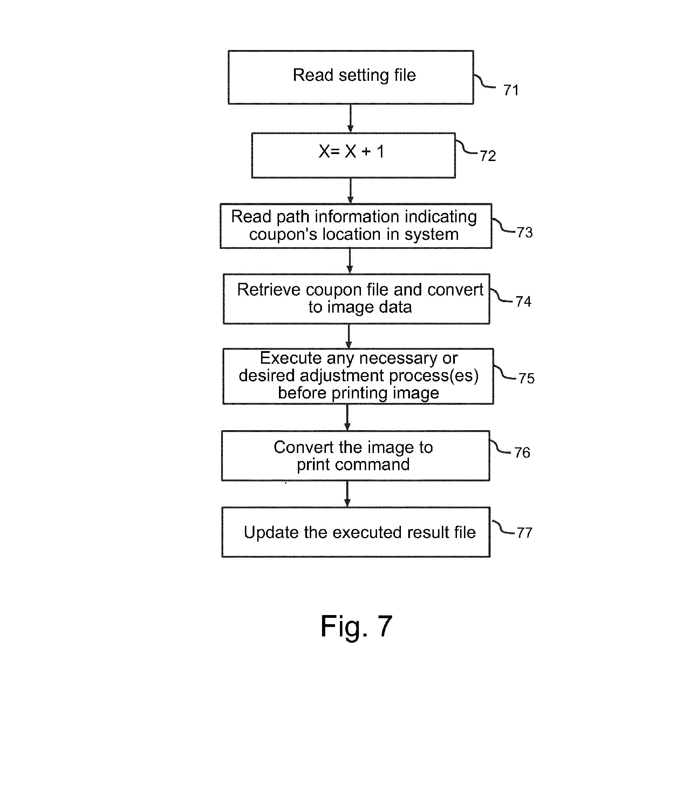

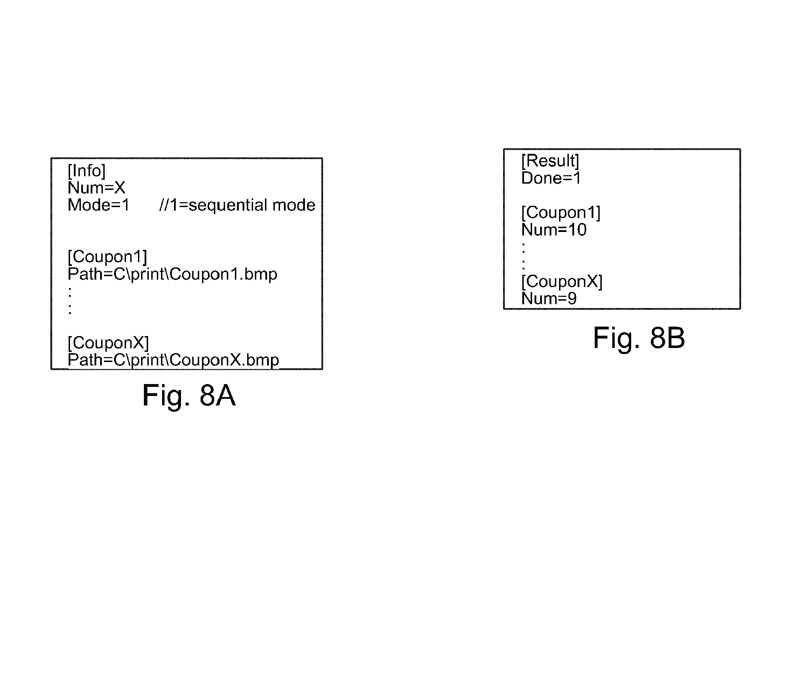

The process of creating a command for coupon printing is shown in additional detail in the flow chart of Fig. 7. The process can be executed by a program of instructions, which may be implemented in software, hardware, or combination thereof. Initially, a setting file is read (step 71). An example of a setting file, which is generated based on information input to coupon setting tool 16, is shown in Fig. 8A. Next, in step 72, the number (X) presently set to indicate the last coupon in the list that was printed is incremented by 1 to set the system for printing the next coupon in the listed sequence. In some embodiments, steps 71 and 72 may be reduced to simply checking that the system is configured to print the next coupon, because a result of execution file was updated after the last coupon was printed. Then, the path information indicating the next coupon's location in the system is read (step 73). The coupon file is retrieved from memory and, if necessary, converted to image data in step 74. Next, the system executes any necessary or desired adjustment process(es), e.g., halftoning, prior to printing the coupon (step 75). Then, the (processed) image is converted to a print command, or a print command is generated based on such image (step 76). After the coupon is printed, in some embodiments, an executed result file is updated. An example of an executed result file is shown in Fig. 8B. With such an update, the system is now set to print the next coupon, and step 72 need not be carried out the next time a coupon is to be printed.

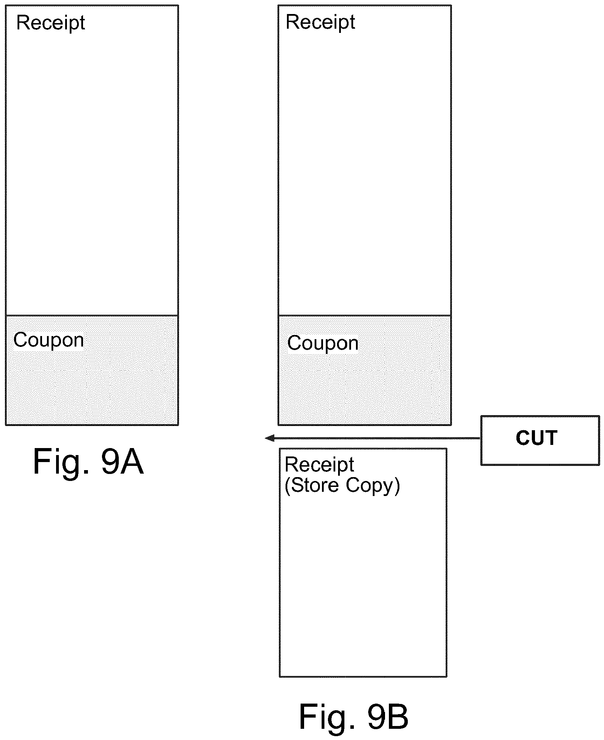

An example of a single page print out containing the receipt portion (from the transaction data) and the coupon is shown in Fig. 9A. Printer driver 17 can be configured to combine the two types of data such that the coupon is be printed below the receipt portion, as shown in the illustrated embodiment, or such that the coupon may be printed above the receipt. It is also possible to generate multiple copies of the receipt portion only, one of which may be retained by the retailer. A third copy may be required or desired for businesses that offer take out or home delivery, with the third copy being included in the bag. In the case of generating two copies of the receipt, after the printing of the customer document (receipt and coupon), a cutting operation is executed to separate the customer document from the second copy of the receipt portion, as shown in Fig. 9B. Another cutting operation would be executed to separate the second and third copies of the receipt, if a third is generated. The system can be configured to not print the coupon on the additional copies.

As the foregoing demonstrates, the enhanced receipt printing system described herein advantageously enables the generation and printing of an enhancement item to a receipt independently of the underlying transaction data indicative of a customer purchase and independently of the host software that is used to process the transaction data.

While the invention has been described in conjunction with several specific embodiments, further alternatives, modifications and variations will be apparent to those skilled in the art in light of the foregoing description. Thus, the invention described herein is intended to embrace all such alternatives, modifications, and variations as may fall within the spirit and scope of the appended claims.
Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. A method for generating a receipt, comprising:
setting a processing mode from among a plurality of processing modes;
receiving transaction data;
processing the transaction data to generate first print data indicative of the transaction data;
selecting and retrieving at least one enhancement item from among a plurality of enhancement items according to the set processing mode;
generating a command and sending the generated command and second print data representative of the selected at least one enhancement item;
printing the first and second print data on the receipt; and
updating a file to indicate that the at least one enhancement item was printed on the receipt.

2. The method of claim 1, wherein the plurality of processing modes include sequential, random, statistical and manual modes.

3. The method of claim 2, wherein, in the sequential mode, the selecting operation comprises selecting and retrieving the at least one enhancement item that is next in a sequence of the plurality of enhancement items.

4. The method of claims 2 or 3, wherein, in the random mode, a present sequence of the plurality of enhancement items is randomly shuffled to create a new sequence of the plurality of enhancement items, and in the random mode, the selecting operation comprises selecting and retrieving the at least one enhancement item that is next in the new sequence of the plurality of enhancement items.

5. The method of at least one of claims 2 to 4, wherein in the statistical mode, a present sequence of the plurality of enhancement items is reconfigured as a new sequence in which each item appears in accordance with a weight assigned to that item, and in the statistical mode, the selecting operation comprises selecting and retrieving the at least one enhancement item that is next in the weighted sequence of the plurality of enhancement items.

6. The method of at least one of claims 2 to 5, wherein, in the manual mode, all of the plurality of enhancement items are displayed for manual selection.

7. The method of claim 6, wherein, in the manual mode, the plurality of enhancement items are displayed in a pop up window.

8. The method of claim 6 or 7, wherein the manual mode includes a time out function, such that, if at least one enhancement item is not selected within a specified period of time, the processing mode automatically changes to one of the sequential, random or statistical processing modes.

9. A system, comprising:
a host (11) that is configured to receive and process transaction data, to generate first print data indicative of the transaction data, and to store a plurality of enhancement items,
the host (11) further including:
a setting tool (16) configured for setting a processing mode from among a plurality of processing modes to configure the system for selecting and retrieving at least one enhancement item from among the plurality of enhancement items in accordance with a set processing mode, the setting tool (16) being further configured for entering information pertaining to the set processing mode, and
printer driver (17) for generating a command for printing the selected at least one enhancement item and for sending the generated command and second print data representative of the selected at least one enhancement item;
and
a printer (21), in communication with the host (11), that is configured to receive the first and second print data and the command based thereon to print a receipt.

10. The system of claim 9, wherein the plurality of processing modes include sequential, random, statistical and manual modes.

11. The system of claim 10, wherein, in the sequential mode, the system is configured for selecting the at least one enhancement item that is next in a sequence of the plurality of enhancement items.

12. The system of claim 10 or 11, wherein, in the random mode, a present sequence of the plurality of enhancement items is randomly shuffled to create a new sequence of the plurality of enhancement items, and in the random mode, the system is configured for selecting the at least one enhancement item that is next in the new sequence of the plurality of enhancement items.

13. The system of at least one of claims 10 to 12, wherein, in the statistical mode, a present sequence of the plurality of enhancement items is reconfigured as a new sequence in which each item appears in accordance with a weight assigned to that item, and in the statistical mode, the system is configured for selecting the at least one enhancement item that is next in the weighted sequence of the plurality of enhancement items.

14. The system of at least one of claims 10 to 13, wherein the host (11) further comprises a display (13), and wherein, in the manual mode, the system is configured to display all of the plurality of enhancement items for manual selection.

15. The system of at least one of claims 9 to 14, wherein the host comprises a POS terminal (11).
